# EUROPÄISCHE PATENTANMELDUNG

(11) **EP 1 394 134 A2**
(43) Veröffentlichungstag der Anmeldung: **03.03.2004**
(21) Anmeldenummer: 03003380.7
(22) Anmeldetag: 14.02.2003
(51) Int. Cl.: C04B 26/04

(54) **Material zur Herstellung von Werkstücken auf Kunststoffbasis mit einem Gehalt an Kaolin**

(30) Priorität: 10.07.2002 DE 20210716 U
(71) Anmelder: Metzner, Bernd, 55743 Kirschweiler (DE)
(72) Erfinder: Metzner, Bernd, 55743 Kirschweiler (DE)
(74) Vertreter: Ratzel, Gerhard, Dr.

(57) **Zusammenfassung**

Die Erfindung betrifft ein Material zur Herstellung von Werkstoffen auf Kunststoffbasis insbesondere von Baumaterialien und Formkörpern sowie Baumaterialien und Formkörpern daraus, das aus einer Schmelzgemisch-Kombination von thermoplstischem Kunststoffmaterial und Kaolin besteht.Ferner kann das erfindunggemässe Material Illit und/oder Quarz und/oder organische und/oder anorganische Pigmente und/oder Schwerspat und/oder Kieselerde und/oder Schiefermehl und/oder Gummimehl enthalten.

## Beschreibung

Die vorliegende Anmeldung bezieht sich auf ein Material zur Herstellung von Werkstoffen auf Kunststoffbasis mit einem Gehalt an Kaolin. Materialien zur Herstellung von Werkstoffen auf Kunststoffbasis mit essentiellen Zusatzstoffen organischer und/oder anorganischer Natur sind dem Stand der Technik in vielfältiger Art bekannt.

So beschreibt z.B. beispielsweise das Deutsche Gebrauchsmuster 297 03 078 ein Material zur Herstellung von Baumaterialien, insbesondere in Plattenform, das aus einem Schmelzgemisch aus thermoplastischem Material und Gummimaterial besteht.

Die Deutsche Gebrauchsmusterschrift 200 00 089 beschreibt eine Schieferplatte als Dachdeckmaterial und Bodenplatte für den Innenausbau von Häusern und sonstige Formteile, welche Platte aus einer Mischung von 50 - 60 Gewichtsprozent Schiefermehl und 50 - 40 Gewichtsprozent Polyethylengranulat besteht.

Zum Stand der Technik gehört ferner die DDR-Patentanmeldung 223143, die ein Verfahren zur Herstellung schwefelgebundener Dacheindeckungsmaterialien auf Schieferbasis beschreibt, wobei das Bindemittel elementarer Schwefel und ein Zuschlagstoff, vorzugsweise Feinschiefer, auf Temperaturen von 130 - 160° C erhitzt und in einem solchen Verhältnis heiß gemischt werden, dass die Mischung 75-85 % Schiefer und 15-25 % Schwefel enthält und durch Pressformgebung unter definierten Bedingungen zu formatisierten Dacheindeckungselementen verdichtet wird.

Zum Stand der Technik ist ferner die Deutsche Offenlegungsschrift 3215756 zu nennen, die eine Formkörpernachbildung mit einem Naturschiefer ähnlichen Oberflächenstruktur, enthaltend einen Kunststoff, wobei der Kunststoff einen Füllstoff enthält und als Füllstoff Aluminiumhydroxid in Pulverform verwendet wird, beschreibt.

Allgemein kann also festgestellt werden, dass Baumaterialien auf der Basis von Kunststoffen mit einem Gehalt an essentiellen Zusatzstoffen in vielfältiger Weise bekannt sind, wobei aber bei zahlreichen Anwendungsfällen immer noch nicht eine Eigenschaftsoptimierung erreicht werden konnte. Dies gilt insbesondere bezüglich einer gewünschten deutlichen Erhöhung der Zugfestigkeit, der Schlagfestigkeit in der Kälte und der Wärmeflexibilität und vor allem der Dichte der Produkte sowie der Erhöhung der Formstabilität, insbesondere für Dach- und Wandprodukte.

Vorliegender Erfindung liegt also insbesondere die Aufgabe zugrunde, diese Eigenschaftsverbesserungen zu erreichen.

Vorliegender Erfindung liegt nun die überraschende Erkenntnis zugrunde, dass diese Eigenschaftsverbesserungen von Materialien zur Herstellung von Werkstoffen auf Kunststoffbasis dadurch erreicht werden, dass als essentieller Zusatzstoff Kaolin verwendet wird.

Kaolin (= Porzellanerde) hat bekanntlich die chemische Formel: Al₂O₃ 2SiO₂ 2H₂O und wird auch als Kaolinit bezeichnet. Obwohl Kaolin in zahlreichen technischen Prozessen, insbesondere bei der ^Papierherstellung als Füllstoff und in der Seifenindustrie in großem Umfang Verwendung findet, sind in der Literatur keine Vorschläge bekannt, Kaolin als essentiellen Zusatzstoff für Materialien zur Herstellung von Werkstoffen auf Kunststoffbasis zu verwenden.

Diese Werkstoffe auf Kunststoffbasis werden insbesondere im Innenund Außenbereich vorzugsweise als Boden-, Dach- und Wandplatten eingesetzt.

Das erfindungsgemäße Material besteht also aus einer Schmelzgemisch-Kombination von thermoplastischem Kunststoffmaterial und Kaolin, wobei gegebenenfalls zur Erreichung weiterer fortschrittlicher Eigenschaften zusätzlich weitere lnhaltstoffe vorhanden sind, wie weiter unten im einzelnen dargelegt wird.

Ein weiterer überraschender Fortschrittsaspekt des erfindungsgemäßen Materials zur Herstellung von Werkstoffen, insbesondere von Baumaterialien besteht in der Schaffung eines gesteuerten Mischprozesses von thermodynamisch an sich unverträglichen Stoffen.

Als weiterer lnhaltstoff ist zu nennen: Illit. Illit ist ein glimmerartiges Tonmineral, das insbesondere in Ziegeltonen und Mergeln vorhanden ist.

Ein weiterer Zusatzstoff ist Quarz.

Weitere Zusatzstoffe sind organische und/oder anorganische Pigmente; von der letzteren Gruppe sind insbesondere Chromoxidgrün und/oder Eisenoxidrot zu nennen.

Weitere gegebenenfalls vorhandene Zusatzstoffe im erfindungsgemäßen Material sind Schwerspat und/oder Kieselerde und/oder Schiefermehl und/oder Gummimehl.

Es hat sich bei der praktischen Durchführung vorliegender Erfindung gezeigt, dass bei der Herstellung von Materialien von Werkstoffen auf Kunststoffbasis mit einem Gehalt an Kaolin folgende Zusammensetzung zur Herstellung von Dach- und Wandplatten als sprunghaft Thermoplastisches Kunststoffmaterial, Gummimehl, Schiefermehl, Schwerspatmehl, Kaolinmehl, Pigmentmehl je nach Farbe.

Es hat sicher ferner herausgestellt, dass zur Schaffung von Bodenplatten und Verblendungselemente, insbesondere die folgende Zusammensetzung empfehlenswert ist:

Thermoplaste, Kaolinmehl, Kieselerdemehl, Pigmentmehl je nach Farbe.

Im folgenden wird nun ein Beispiel zur Herstellung eines Werkstoffs aus dem erfindungsgemäßen Material im einzelnen ausgeführt:

### Ausführunqsbeispiel:

Eine 50 kg Mischung zur Herstellung von Dach- und Wandplatten setzt sich wie folgt zusammen:

| | |
|---|---|
| Bogenschnitt-Platten 25 cm × 25 cm × 4,5 cm oder 30 cm × 30 cm × 4,5 cm | 30 % Polypropylen (Korngröße 3 mm) |
| | 20 % Polyethylen (Korngröße 3 mm) |
| | 30 % Schiefermehl |
| | 18 % Kaolin (Pulverform) |
| | 2 % Gummi-Rauhmehl (Korngröße 0,2 - 1 mm) |
| | |
| Rechteck-Platten 38 cm × 24 cm × 4,5 cm | 30 % Polypropylen (Korngröße 3 mm) |
| | 20 % Polyethylen (Korngröße 3 mm) |
| | 30 % Schiefermehl |
| | 20 % Kaolin/Kieselerde (Pulverform) |
| Plattenverbund-Biber 56 cm × 24 cm × 15 cm Rückseite gekammert | 50 % Polypropylen (Korngröße 3 mm) |
| | 20 % Polyethylen (Korngröße 3 mm) |
| | 28 % Kaolin (Pulverform) |
| | 2 % Gummi |

Der Farbe entsprechend werden die Pigmente prozentual zwischen 0,2 - 1 % zugemischt.

Die Materialanteile werden in einer speziell angefertigten Großmischanlage vermengt und den einzelnen Spritzgussmaschinen mit nochmals aufgesetztem Kleinmischer zugeführt.

Der Schmelzvorgang wird in der Spritzeinheit bei 220° - 240° durchgeführt. Die Kühlzeit in der Form wird gesteuert.

Allgemeine Produkteigenschaften:
Durch die Zumischung der essentiellen Füllstoffe wird die Dichte von 1,23 g/cm3 auf 2,46 g/cm3 verändert. Diese Steigerung ist notwendig, um die benötigte Festigkeit und Steifheit wie bei echtem Schiefer zu erlangen. Dadurch wird sowohl die Schlagbiegefestigkeit, die Zugfestigkeit, die Kerbbiegeschlagfestigkeit sowohl bei normaler wie extremer Temperatur dahingehend verändert, dass die Verarbeitungstechniken dem Schiefer angepasst werden.

Diese Eigenschaftsverbesserungen sind für die Dach- und Wandprodukte notwendig.

Allgemein kann bezüglich der Beispiele der vorliegenden Erfindung folgendes festgestellt werden, dass das erfindungsgemäße Material als Füllstoff ein Gemisch aus 50 % Schiefermehl und 50 % Kaolin aufweist, wobei als Farbstoffe Chromoxidgrün SMM6 und/oder Eisenoxid R497M eingesetzt werden.

Ergänzend zu den obigen Fortschrittsaspekten wird ausgeführt, dass sich die Eigenschaften der Produkte entscheidend dahingehend verändern, dass beispielsweise die Dach- und Wandprodukte mehr Steifigkeit besitzen, hitzebeständiger sind und auch vor allem stärker durchgefärbt sind.

Diese Steifigkeit, beispielsweise durch Beimischung von Schiefermehl zum Kaolin, verhindern ein Verformen bei Hitze, es besteht eine bessere UV-Beständigkeit und Erhöhung der Farbsicherheit.

Das erfindungsgemäße Material führt zu Produkten mit mineralischem Aussehen, beispielsweise zu einem schieferartigen Aussehen.

## Patentansprüche

1. Material zur Herstellung von Werkstoffen auf Kunststoffbasis, insbesondere von Baumaterialien und Formkörpern sowie Baumaterialien und Formkörpern daraus,
**dadurch gekennzeichnet,**
**dass** das Material aus einer Schmelzgemisch-Kombination von thermoplastischem Kunststoffmaterial und Kaolin besteht.

2. Material nach Anspruch 1,
**dadurch gekennzeichnet,**
**dass** es Illit enthält.

3. Material nach Anspruch 1 - 2,
**dadurch gekennzeichnet,**
**dass** es Quarz enthält.

4. Material nach Anspruch 1 - 3,
**dadurch gekennzeichnet,**
**dass** es organische Pigmente enthält.

5. Material nach Anspruch 1 - 4,
**dadurch gekennzeichnet,**
**dass** es anorganische Pigmente enthält.

6. Material nach Anspruch 5,
**dadurch gekennzeichnet,**
**dass** es Chromoxidgrün und/oder Eisenoxidrot enthält.

7. Material nach Anspruch 1 - 6,
**dadurch gekennzeichnet,**
**dass** es Schwerspat enthält.

8. Material nach Anspruch 1 - 7,
**dadurch gekennzeichnet,**
**dass** es Kieselerde enthält.

9. Material nach Anspruch 1 - 8,
**dadurch gekennzeichnet,**
**dass** es Schiefermehl enthält.

10. Material nach Anspruch 1 - 9,
**dadurch gekennzeichnet,**
**dass** es Gummimehl enthält.

11. Material nach Anspruch 1 - 10,
**dadurch gekennzeichnet,**
**dass** die lnhaltstoffe der Schmelzgemischkombination in Pulverform vorliegen.
